(19) **Europäisches Patentamt / European Patent Office / Office européen des brevets**

(11) **EP 4 693 453 A1**

(12) # EUROPEAN PATENT APPLICATION
published in accordance with Art. 153(4) EPC

(43) Date of publication:
**11.02.2026 Bulletin 2026/07**

(21) Application number: **24851544.7**

(22) Date of filing: **16.07.2024**

(51) International Patent Classification (IPC):
*H01M 4/139* (2010.01)    *H01M 4/13* (2010.01)
*H01M 4/62* (2006.01)

(52) Cooperative Patent Classification (CPC):
**H01M 4/13; H01M 4/139; H01M 4/62;** Y02E 60/10

(86) International application number:
**PCT/JP2024/025489**

(87) International publication number:
**WO 2025/033115 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023130751**

(71) Applicant: **GS Yuasa International Ltd.**
**Kisshoin, Minami-ku,**
**Kyoto-shi, Kyoto 601-8520 (JP)**

(72) Inventors:
• **ISHIBASHI, Yuki**
**Kyoto-shi, Kyoto 601-8520 (JP)**
• **YABUKI, Akinori**
**Kyoto-shi, Kyoto 601-8520 (JP)**

(74) Representative: **Isarpatent**
**Patent- und Rechtsanwälte Partg mbB**
**Friedrichstraße 31**
**80801 München (DE)**

(54) **SLURRY FOR POSITIVE ELECTRODE, POSITIVE ELECTRODE, METHOD FOR PRODUCING POSITIVE ELECTRODE, AND BATTERY**

(57)    A slurry for a positive electrode contains a positive active material containing sulfur, a sulfide-based solid electrolyte, a binder, a first solvent, and a second solvent, in which the first solvent is one or more selected from fluorinated ethers and fluorinated alkanes, and the second solvent is one or more selected from solvents in which values of a dispersion parameter $\delta_d$, a polarity parameter $\delta_p$, and a hydrogen bonding parameter $\delta_h$ in Hansen solubility parameters (HSP values) satisfy ranges of $14.8 \leq \delta_d \leq 17.5$, $1.0 \leq \delta_p \leq 7.0$, and $1.0 \leq \delta_h \leq 7.0$, respectively.

Fig. 1

**Description**

TECHNICAL FIELD

The present invention relates to a slurry for a positive electrode, a positive electrode using the slurry for a positive electrode, a method for producing the positive electrode, and a battery including the positive electrode.

BACKGROUND ART

In recent years, demand for lithium-ion secondary batteries has been increasing as power sources for electric vehicles, hybrid vehicles, and the like. As an electrolyte used in this battery, a flame-retardant solid electrolyte has been actively developed from the viewpoint of simplifying a system for ensuring safety.

On the other hand, a sulfur positive electrode using a high-capacity sulfur active material has been developed as a positive electrode; however, when combined with an electrolyte solution, the sulfur active material dissolves into the electrolyte solution, which has been a problem. In all-solid-state secondary batteries using a solid electrolyte, the problem of dissolution of the sulfur active material does not occur, and therefore, sulfur positive electrodes are promising for application in such batteries. In addition, among solid electrolytes, sulfide-based solid electrolytes are easily densified by pressing and are commonly used. In consideration of mass productivity, it is preferable to produce the positive electrode by producing a slurry and applying the slurry onto a substrate; accordingly, a technique for producing a positive electrode from a slurry containing a sulfur active material and a sulfide-based solid electrolyte has been developed (see, for example, Patent Documents 1 and 2).

Patent Document 1 discloses "A positive electrode mixture slurry comprising:

a positive electrode material containing a conductive material having pores and an active material, the active material being present on at least one of a surface of the conductive material and the pores;
solid electrolyte particles containing lithium and sulfur;
a binder that is a resin containing, in a molecular backbone, a structural unit represented by the following formula (I);
a thickener; and
a solvent for dissolving part or all of the thickener,
wherein the active material is sulfur or a compound containing sulfur,
the solvent is one or more selected from a fluorine-based solvent and a hydrocarbon-based solvent, and
the conductive material is a particulate conductive material.

[Formula 8] (omitted)" (claim 1).

In addition, Patent Document 1 also discloses that "The binder is preferably dispersed in a solvent, for example, in the positive electrode mixture slurry of the present invention. Here, part or all of the binder may be dissolved in the solvent.", "In the slurry of the present invention, the binder may be dispersed in a solvent, and the selection of the binder and the solvent can be expanded." (paragraph [0050]), "The solvent is a solvent that dissolves part or all of the thickener. In addition, the solvent is preferably a solvent that disperses the binder.", "Examples of the solvent include a fluorine-based solvent and a hydrocarbon-based solvent. Specific examples include fluorocarbons, fluorobenzene, trifluoromethylbenzene, bistrifluoromethylbenzene, benzene, toluene, and xylene.", and "The solvents may be used alone or in combination of two or more kinds as a mixed solvent." (paragraph [0053]).

Furthermore, Example 1 of Patent Document 1 describes that "1.0 g of S-LEC BH-S (manufactured by SEKISUI CHEMICAL CO., LTD.) as a thickener and 11.5 g of toluene (manufactured by Wako Pure Chemical Industries, Ltd.) were placed in a glass case and stirred and dissolved on a hot plate at 90°C for 8 hours. 2.12 g of the obtained solution, 2.83 g of PVDF-HFP (Kynar LBG, manufactured by Arkema S.A.) as a binder, and 5.22 g of toluene were further added, and the mixture was stirred and mixed at 5,000 rpm for 1 minute using a small FILMIX (manufactured by PRIMIX Corporation) to obtain a thickener/binder mixed solution 1.", and "6.20 g of a positive composite 1, 2.12 g of the thickener/binder mixed solution 1, and 3.67 g of a toluene solvent were added, and the mixture was stirred and mixed at 5,000 rpm for 1 minute using the FILMIX to obtain a slurry for a positive electrode." (paragraph [0082]), and Example 3 describes that "Except that benzotrifluoride (manufactured by Tokyo Chemical Industry Co., Ltd.) was used instead of toluene to prepare a thickener/binder mixed solution and a positive electrode mixture slurry, a battery was manufactured and evaluated similarly to Example 1." (paragraph [0089]).

Patent Document 2 describes "A method for producing a positive electrode for an all-solid-state lithium-sulfur battery, the method comprising applying a slurry for a positive electrode containing a positive active material, a solid electrolyte, a binder, and a solvent to a positive current collector to form a positive active material layer, wherein the positive active material contains sulfur and the solvent has a donor number of nineteen or less." (claim 1).

In addition, Patent Document 2 describes that "···, when butyl butyrate is used as the solvent of the slurry for a positive electrode, in the case in which the positive active material contains sulfur, sulfur-containing components such as sulfur may be unevenly distributed at the edge of the coated surface of the slurry for a positive electrode." (paragraph [0005]), "Examples of the solvent having a donor number of nineteen or less include dibutyl ether (donor number: 19), anisole (donor number: 9), and heptane (donor number: 0). The solvent having a donor number of nineteen or less used in the slurry for a positive electrode may be one kind or two or more kinds." (paragraph [0020]), and "The binder used in the present disclosure is not particularly limited as long as it can dissolve in the solvent used in the slurry for a positive electrode. Examples of the binder include an acrylic binder, a fluorine-containing binder such as polyvinylidene fluoride (PVDF) or polytetrafluoroethylene (PTFE), and a rubber binder such as butadiene rubber." (paragraph [0026]).

Patent Document 3 describes "A method for manufacturing an all-solid-state battery, the method comprising a step of forming an electrolyte-containing layer using a slurry containing a sulfide solid electrolyte containing an Li element, a P element, and an S element, a PVDF-based binder, and a solvent, wherein the solvent contains, as a first solvent, 50% by volume or more of a ketone solvent represented by general formula (1), ···." (claim 1), "The method for manufacturing an all-solid-state battery according to claim 1, wherein the slurry further contains a positive active material, and the electrolyte-containing layer is a positive active material layer." (claim 2), and "The method for manufacturing an all-solid-state battery according to any one of claims 1 to 5, wherein the solvent contains, as a second solvent, at least one of a saturated hydrocarbon solvent and an aromatic hydrocarbon solvent." (claim 6).

In addition, Patent Document 3 describes "In contrast, since the above-described ketone solvent can dissolve the PVDF-based binder, the binder can be uniformly dispersed in the layer. Therefore, the number of adhesion points increases, and the original performance of the PVDF-based binder can be sufficiently exhibited. As a result, even when the amount of binder used is small, sufficient binding strength can be obtained. On the other hand, since the above-described ketone solvent has relatively low polarity, deterioration of the sulfide solid electrolyte can be suppressed." (paragraph [0029]), and "It is preferable that the saturated hydrocarbon solvent is, for example, an alkane. The alkane may be a linear alkane or may be a cyclic alkane. The number of carbon atoms of the saturated hydrocarbon solvent is, for example, 5 or more, may be 7 or more, and may be 9 or more. On the other hand, the number of carbon atoms of the saturated hydrocarbon solvent is, for example, 15 or less, and may be 10 or less. Examples of the saturated hydrocarbon solvent include isopentane, isohexane, n-hexane, cyclohexane, methylcyclohexane, ethylcyclohexane, n-heptane, isooctane, and n-decane." (paragraph [0040]).

PRIOR ART DOCUMENTS

PATENT DOCUMENTS

Patent Document 1: JP-B-5926131
Patent Document 2: JP-A-2020-119761
Patent Document 3: JP-A-2019-91632

SUMMARY OF THE INVENTION

PROBLEMS TO BE SOLVED BY THE INVENTION

In a positive electrode using a slurry containing conventional solvents such as butyl butyrate, benzotrifluoride (trifluoromethylbenzene), and ketones, there has been a problem that it is difficult to achieve both coating properties and binding properties and discharge capacity.

An object of the present invention is to provide a slurry for a positive electrode having favorable coating properties and binding properties and having favorable discharge capacity, a positive electrode using the slurry for a positive electrode, a method for producing the positive electrode, and a battery including the positive electrode.

MEANS FOR SOLVING THE PROBLEMS

A slurry for a positive electrode according to one aspect of the present invention is a slurry for a positive electrode that contains a positive active material containing sulfur, a sulfide-based solid electrolyte, a binder, a first solvent, and a second solvent, in which the first solvent is one or more selected from fluorinated ethers and fluorinated alkanes, and the second solvent is one or more selected from solvents in which values of a dispersion parameter $\delta_d$, a polarity parameter $\delta_p$, and a hydrogen bonding parameter $\delta_h$ in Hansen solubility parameters (HSP values) satisfy ranges of $14.8 \leq \delta_d \leq 17.5$, $1.0 \leq \delta_p \leq 7.0$, and $1.0 \leq \delta_h \leq 7.0$, respectively.

A slurry for a positive electrode according to another aspect of the present invention is a slurry for a positive electrode that contains a positive active material containing sulfur, a sulfide-based solid electrolyte, a binder, a first solvent, and a second solvent, in which the first solvent is one or more selected from fluorinated ethers and fluorinated alkanes, and the second solvent is one or more selected from carboxylic acid esters, and trifluoroalkylbenzenes or bis(trifluoroalkyl) benzenes having a terminal $CF_3$ group.

A positive electrode according to still another aspect of the present invention is a positive electrode using the slurry for a positive electrode.

A method for producing a positive electrode according to still another aspect of the present invention is a method for producing a positive electrode, the method including applying the slurry for a positive electrode onto a substrate and drying the slurry.

A battery according to still another aspect of the present invention is a battery including the positive electrode.

ADVANTAGES OF THE INVENTION

A slurry for a positive electrode according to one aspect and another aspect of the present invention has favorable coating properties and binding properties, a positive electrode using the slurry for a positive electrode according to still another aspect of the present invention, and a battery including the positive electrode, have favorable binding properties of a positive active material layer and also exhibit excellent discharge capacity, and a method for producing a positive electrode according to still another aspect of the present invention provides the effect of being able to provide a positive electrode having favorable binding properties of a positive active material layer and excellent discharge capacity.

BRIEF DESCRIPTION OF THE DRAWINGS

Fig. 1 is a schematic view illustrating an embodiment of an all-solid-state secondary battery.
Fig. 2 is a schematic view illustrating an embodiment of an energy storage apparatus configured by assembling a plurality of all-solid-state secondary batteries.

MODE FOR CARRYING OUT THE INVENTION

First, outlines of a slurry for a positive electrode, a positive electrode, and a battery disclosed in the present specification will be described.

[1] A slurry for a positive electrode according to one aspect of the present invention contains a positive active material containing sulfur, a sulfide-based solid electrolyte, a binder, a first solvent, and a second solvent, in which the first solvent is one or more selected from fluorinated ethers and fluorinated alkanes, and the second solvent is one or more selected from solvents in which values of a dispersion parameter $\delta_d$, a polarity parameter $\delta_p$, and a hydrogen bonding parameter $\delta_h$ in Hansen solubility parameters (HSP values) satisfy ranges of $14.8 \leq \delta_d \leq 17.5$, $1.0 \leq \delta_p \leq 7.0$, and $1.0 \leq \delta_h \leq 7.0$, respectively.
The slurry for a positive electrode according to [1] has favorable coating properties and binding properties by combining the first solvent and the second solvent, and by using the slurry for a positive electrode according to [1], not only favorable binding properties of a positive active material layer are obtained, but also a positive electrode and a battery having excellent discharge capacity can be obtained.
[2] A slurry for a positive electrode according to another aspect of the present invention contains a positive active material containing sulfur, a sulfide-based solid electrolyte, a binder, a first solvent, and a second solvent, in which the first solvent is one or more selected from fluorinated ethers and fluorinated alkanes, and the second solvent is one or more selected from carboxylic acid esters, and trifluoroalkylbenzenes or bis(trifluoroalkyl)benzenes having a terminal $CF_3$ group.
The slurry for a positive electrode according to [2] has favorable coating properties and binding properties by combining the first solvent and the second solvent, and by using the slurry for a positive electrode according to [2], not only favorable binding properties of a positive active material layer are obtained, but also a positive electrode and a battery having excellent discharge capacity can be obtained.
[3] In the slurry for a positive electrode according to [1] or [2], the binder may be a fluororesin.
The slurry for a positive electrode according to [3] can be a slurry for a positive electrode having favorable binding properties.
[4] In the slurry for a positive electrode according to any one of [1] to [3], the first solvent may have a boiling point of 50°C or higher and 220°C or lower.
In the slurry for a positive electrode according to [4], by setting the boiling point of the first solvent to be equal to or higher than the above lower limit, the drying rate of the solvent contained in the slurry for a positive electrode can be prevented from becoming excessively high, and the slurry for a positive electrode can have favorable coating properties. By setting the boiling point of the first solvent to be equal to or lower than the above upper limit, the amount of residual solvent contained in the positive active material layer after applying and drying of the positive electrode slurry can be reduced, and the risk of reduction in discharge capacity of the battery due to the residual solvent can be reduced.

[5] In the slurry for a positive electrode according to any one of [1] to [4], the second solvent may have a boiling point of 80°C or higher and 220°C or lower.

In the slurry for a positive electrode according to [5], by setting the boiling point of the second solvent to be equal to or higher than the above lower limit, the drying rate of the solvent contained in the slurry for a positive electrode can be prevented from becoming excessively high, and the slurry for a positive electrode can have favorable coating properties. By setting the boiling point of the second solvent to be equal to or lower than the above upper limit, the amount of residual solvent contained in the positive active material layer after applying and drying of the positive electrode slurry can be reduced, and the risk of reduction in discharge capacity of the battery due to the residual solvent can be reduced.

[6] In the slurry for a positive electrode according to any one of [1] to [5], the second solvent may contain a fluorine element in a molecular structure.

The slurry for a positive electrode according to [6] can suppress the solubility of sulfur in the second solvent, and therefore can reduce the risk of a decrease in discharge capacity of the battery.

[7] In the slurry for a positive electrode according to any one of [1] to [6], the boiling point of the first solvent may be 50°C or higher and 65°C or lower, and the boiling point of the second solvent may be 140°C or higher, or the boiling point of the first solvent may be 65°C or higher and 80°C or lower, and the boiling point of the second solvent may be 120°C or higher.

In the slurry for a positive electrode according to [7], the drying rate of the solvent contained in the slurry for a positive electrode can be prevented from becoming excessively high, and the slurry for a positive electrode can have favorable coating properties.

[8] In the slurry for a positive electrode according to any one of [1] to [7], a mixing ratio (% by mass) of the first solvent and the second solvent may be in a range of 99 : 1 to 10 : 90 for the first solvent to the second solvent.

In the slurry for a positive electrode according to [8], the drying rate of the solvent contained in the slurry for a positive electrode can be prevented from becoming excessively high, and the slurry for a positive electrode can have favorable coating properties.

[9] A positive electrode according to still another aspect of the present invention is a positive electrode produced using the slurry for a positive electrode according to any one of [1] to [8].

The positive electrode according to [9] has favorable binding properties of a positive active material layer and also exhibits excellent discharge capacity by using a slurry for a positive electrode having favorable coating properties and binding properties.

[10] A method for producing a positive electrode according to still another aspect of the present invention is a method including applying the slurry for a positive electrode according to any one of [1] to [8] onto a substrate and drying the slurry.

The method for producing a positive electrode according to [10] can provide a positive electrode having favorable binding properties of a positive active material layer and excellent discharge capacity.

[11] A battery according to still another aspect of the present invention is a battery including the positive electrode according to [9].

The battery according to [11] includes a positive electrode produced using a slurry for a positive electrode having favorable coating properties and binding properties, and has excellent discharge capacity.

Values of a dispersion parameter $\delta_d$, a polarity parameter $\delta_p$, and a hydrogen bonding parameter $\delta_h$ as Hansen solubility parameters (HSP values) are calculated as follows.

Based on the chemical structure of the compound to be calculated, HSP values (a dispersion parameter $\delta_d$, a polarity parameter $\delta_p$, and a hydrogen bonding parameter $\delta_h$) and an SP value $\sigma_t$ are calculated by structural calculation. For the calculation, the Y-MB method in the DYI program of Hansen Solubility Parameters in Practice (HSPiP) ver. 5.4.03 is used. Note that the relationship between the SP value $\sigma_t$ and the HSP values (the dispersion parameter $\delta_d$, the polarity parameter $\delta_p$, and the hydrogen bonding parameter $\delta_h$) is represented by the following equation (1).

$$\sigma_t{}^2 = \delta_d{}^2 + \delta_p{}^2 + \delta_h{}^2 \ ... \ (1)$$

In an embodiment of the present invention (hereinafter, referred to as "the present embodiment"), a configuration of a battery, a positive electrode, a method for producing the positive electrode (including a slurry for a positive electrode), a negative electrode, a method for producing the negative electrode, a solid electrolyte layer, a method for producing the solid electrolyte layer, a method for producing a battery, and a configuration of an energy storage apparatus, as well as other embodiments, will be described in detail in this order. Note that the names of the respective components (respective elements) used in each embodiment may differ from the names of the respective components (respective elements) used in the background art.

<Configuration of battery, components (positive electrode, negative electrode, solid electrolyte layer) of battery, and production methods thereof>

(Configuration of battery)

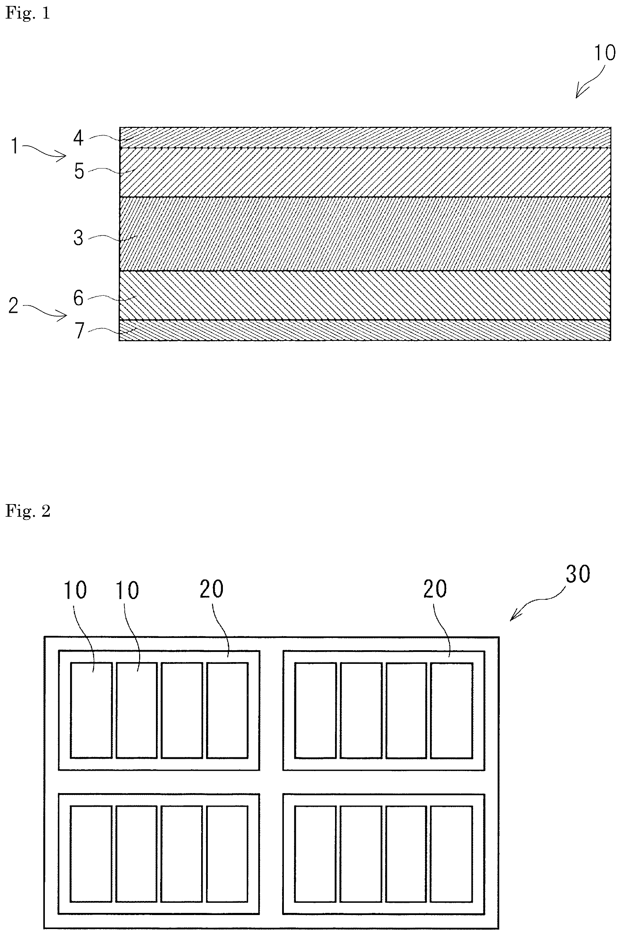

The battery according to the present embodiment is preferably an all-solid-state secondary battery. The all-solid-state secondary battery includes an electrode assembly having a positive electrode, a negative electrode, and a solid electrolyte layer, and a case that houses the electrode assembly. The electrode assembly is usually of a layered type in which a positive electrode and a negative electrode are stacked with a solid electrolyte layer interposed therebetween. In addition, the electrode assembly may be of a so-called "bipolar type" in which a positive active material layer is formed on one surface of an electrode substrate and a negative active material layer is formed on the other surface of the electrode substrate. Fig. 1 illustrates an example of an all-solid-state secondary battery. An all-solid-state secondary battery 10 is a battery in which a positive electrode 1 and a negative electrode 2 are stacked with a solid electrolyte layer 3 interposed therebetween. The positive electrode 1 has a positive substrate 4 and a positive active material layer 5. The negative electrode 2 has a negative substrate 7 and a negative active material layer 6. In the all-solid-state secondary battery 10 illustrated in Fig. 1, the negative active material layer 6, the solid electrolyte layer 3, the positive active material layer 5, and the positive substrate 4 are stacked in this order on the negative substrate 7.

(Positive electrode)

The positive electrode has a positive substrate and a positive active material layer disposed on the positive substrate directly or with an intermediate layer interposed therebetween.

The positive substrate has conductivity. Whether the positive substrate has "conductivity" or not is determined with the volume resistivity of $10^7 \, \Omega\cdot\text{cm}$ measured in accordance with JIS-H-0505 (1975) as a threshold. As the material of the positive substrate, a metal such as aluminum, titanium, tantalum, or stainless steel, or an alloy thereof is used. Among these materials, aluminum or an aluminum alloy is preferable from the viewpoints of potential resistance, the magnitude of conductivity, and costs. Examples of the positive substrate include a foil, a deposited film, a mesh, and a porous material, and a foil is preferable from the viewpoint of costs. Therefore, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 $\mu$m or more and 50 $\mu$m or less, more preferably 5 $\mu$m or more and 40 $\mu$m or less, still more preferably 8 $\mu$m or more and 30 $\mu$m or less, and particularly preferably 10 $\mu$m or more and 25 $\mu$m or less. By setting the average thickness of the positive substrate within the above range, it is possible to enhance the energy density per volume of the battery while increasing the strength of the positive substrate.

The intermediate layer is a layer arranged between the positive substrate and the positive active material layer. The intermediate layer contains a conductive agent such as carbon particles, thereby reducing contact resistance between the positive substrate and the positive active material layer. The configuration of the intermediate layer is not particularly limited, and contains, for example, a binder and a conductive agent.

The positive active material layer is formed from a so-called positive composite containing a positive active material, a sulfide-based solid electrolyte, and a binder. In the present embodiment, the positive active material layer preferably contains a conductive agent. The positive active material layer contains, as necessary, an optional component such as a thickener and a filler.

In the present embodiment, the positive active material includes a positive active material containing sulfur (sulfur active material).

As the sulfur active material, a known sulfur active material can be used, and elemental sulfur and a compound containing a sulfur element, such as titanium sulfide, molybdenum sulfide, iron sulfide, copper sulfide, nickel sulfide, lithium sulfide, an organic disulfide compound, or a carbon sulfide compound can be used.

The sulfur active material may be in the form of a composite with a conductive agent (a material having higher conductivity than elemental sulfur or a compound containing a sulfur element) or the like. Examples of the composite include a composite in which a sulfur active material is supported on a conductive agent serving as a carrier, and specific examples thereof include a composite of a sulfur active material and porous carbon (sulfur-porous carbon composite:

SPC). The lower limit of the content of the sulfur element in the SPC (the ratio of the mass of sulfur atoms to the mass of the SPC) is preferably 50% by mass, and more preferably 60% by mass. On the other hand, the upper limit of this content is preferably 90% by mass, and more preferably 80% by mass. By setting the content of the sulfur element in the SPC within the above range, it is possible to achieve both a large electric capacity and favorable conductivity.

The lower limit of the content of the sulfur element in the positive active material layer (the ratio of the mass of sulfur atoms to the mass of the positive active material layer) is preferably 15% by mass, and more preferably 25% by mass. On the other hand, the upper limit of this content is preferably 80% by mass, and more preferably 70% by mass. When an SPC is used, the lower limit of the content of the SPC in the positive active material layer is preferably 30% by mass, more preferably 35% by mass, and still more preferably 40% by mass. On the other hand, the upper limit of this content is preferably 90% by mass, and more preferably 80% by mass. By setting the content of the sulfur element or the SPC within the above range, it is possible to achieve both a large electric capacity and favorable conductivity, and increase the energy density.

The positive active material may contain a positive active material other than the sulfur active material. However, the lower limit of the content of the sulfur element in the total positive active material (the ratio of the mass of sulfur atoms to the mass of the total positive active material) is preferably 30% by mass, more preferably 50% by mass, and still more preferably 70% by mass. The lower limit of the content of the SPC in the total positive active material is preferably 80% by mass, more preferably 90% by mass, and still more preferably 99% by mass.

The conductive agent is not particularly limited as long as it is a material exhibiting electrical conductivity. Examples of such a conductive agent include carbonaceous materials; metals; and conductive ceramics. Examples of carbonaceous materials include graphite and carbon black. Examples of the type of the carbon black include furnace black, acetylene black, and Ketjen Black. Among these, carbonaceous materials are preferable from the viewpoint of conductivity and coating properties. In particular, acetylene black and Ketjen Black are preferable. Examples of the shape of the conductive agent include a powder shape, a sheet shape, and a fibrous shape. Note that the conductive agent may be in the form of a composite with the sulfur active material as described above, or may be in a form other than a composite with the sulfur active material. That is, for example, the positive active material layer may contain the conductive agent constituting the SPC and another conductive agent different therefrom.

The content of the conductive agent (excluding the conductive agent in the SPC) in the positive active material layer is preferably 1% by mass or more and 40% by mass or less, more preferably 3% by mass or more and 30% by mass or less, still more preferably 5% by mass or more and 20% by mass or less, and may be even more preferably 10% by mass or more. By setting the content of the conductive agent within the above range, the energy density of the battery can be increased.

As another positive active material other than the sulfur active material, another known positive active material capable of occluding and releasing lithium ions can be used. Examples of the other positive active material include a lithium transition metal composite oxide having an $\alpha$-NaFeO$_2$-type crystal structure, a lithium transition metal composite oxide having a spinel-type crystal structure, a polyanion compound, and other chalcogenides other than a chalcogenide containing a sulfur element.

The positive active material is usually particles (powder). The average particle size of the positive active material is preferably, for example, 0.1 $\mu$m or more and 20 $\mu$m or less. By setting the average particle size of the positive active material to be equal to or greater than the above lower limit, the positive active material is easily produced or handled. By setting the average particle size of the positive active material to be equal to or less than the above upper limit, the capacity during high rate discharge can be increased. Note that in the case of using a composite of the positive active material and another material, the average particle size of the composite is regarded as the average particle size of the positive active material. The "average particle size" refers to a value corresponding to 50% in a volume-based cumulative distribution, calculated in accordance with JIS-Z-8819-2 (2001), based on a particle size distribution measured by a laser diffraction/scattering method on a diluted solution obtained by diluting particles with a solvent in accordance with JIS-Z-8825 (2013).

In order to obtain the positive active material with a predetermined particle size, a crusher, a classifier, or the like is used. Examples of a crushing method include methods using a mortar, a ball mill, a sand mill, a vibration ball mill, a planetary ball mill, a jet mill, a counter jet mill, a swirling airflow-type jet mill, and a sieve. During crushing, wet crushing in which water or an organic solvent such as hexane is present can also be used. As a classification method, a sieve, an air classifier, or the like may be used as needed in either dry or wet classification.

Examples of the sulfide-based solid electrolyte include Li$_6$PS$_5$Cl, Li$_2$S-P$_2$S$_5$, Li$_2$S-P$_2$S$_5$-LiI, Li$_2$S-P$_2$S$_5$-LiCl, Li$_2$S-P$_2$S$_5$-LiBr, Li$_2$S-P$_2$S$_5$-Li$_2$O, Li$_2$S-P$_2$S$_3$-Li$_2$O-LiI, Li$_2$S-P$_2$S$_5$-Li$_3$N, Li$_2$S-SiS$_2$, Li$_2$S-SiS$_2$-LiI, Li$_2$S-SiS$_2$-LiBr, Li$_2$S-SiS$_2$-LiCl, Li$_2$S-SiS$_2$-B$_2$S$_3$-LiI, Li$_2$S-SiS$_2$-P$_2$S$_5$-LiI, Li$_2$S-B$_2$S$_3$, Li$_2$S-P$_2$S$_5$-Z$_m$S$_{2n}$ (where m and n are positive numbers, and Z is any of Ge, Zn, and Ga), Li$_2$S-GeS$_2$, Li$_2$S-SiS$_2$-Li$_3$PO$_4$, and Li$_2$S-SiS$_2$-Li$_x$MO$_y$ (where x and y are positive numbers, and M is any one of P, Si, Ge, B, Al, Ga, and In).

The content of the sulfide-based solid electrolyte in the positive active material layer is preferably 10% by mass or more and 70% by mass or less, more preferably 20% by mass or more and 65% by mass or less, still more preferably 30% by mass or more and 60% by mass or less. By setting the content of the sulfide-based solid electrolyte within the above range, it is possible to achieve higher energy density in the positive active material layer.

As the solid electrolyte in the positive active material layer, other solid electrolytes such as known halide-based solid electrolytes and oxide-based solid electrolytes may be used in combination as long as the effects of the present invention are not impaired.

Examples of the binder include thermoplastic resins such as a fluororesin, polyethylene, polypropylene, polyacryl, and polyimide; elastomers such as ethylene-propylene-diene rubber (EPDM), sulfonated EPDM, styrene-butadiene rubber (SBR), and fluororubber; and polysaccharide polymers. The binder is preferably a fluororesin. When a fluororesin is used as the binder, the binding property is further improved. As the fluororesin, polyvinylidene fluoride (PVdF), polytetrafluoroethylene (PTFE), a copolymer of a vinylidene fluoride monomer with one or more fluorine-containing monomers selected from tetrafluoroethylene, hexafluoropropylene, chlorotrifluoroethylene, vinyl fluoride, and perfluoroalkyl vinyl ether, such as polyvinylidene fluoride-hexafluoropropylene copolymer (PVdF-HFP), or the like can be used. Among these fluororesins, those having solubility in the second solvent are preferable.

The content of the binder in the positive active material layer is preferably 1% by mass or more and 10% by mass or less, and more preferably 3% by mass or more and 9% by mass or less. By setting the content of the binder within the above range, the positive active material can be stably retained.

Examples of the thickener include polysaccharide polymers such as carboxymethyl cellulose (CMC) and methyl cellulose. When the thickener has a functional group that reacts with lithium or the like, the functional group may be deactivated in advance by methylation or the like. In the present embodiment, the positive active material layer may not contain a thickener as described in Patent Document 1. Even when a thickener as described in Patent Document 1 is not contained, the binding property of the positive active material layer is favorable.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide, and aluminosilicate, hydroxides such as magnesium hydroxide, calcium hydroxide, and aluminum hydroxide, carbonates such as calcium carbonate, sparingly soluble ionic crystals such as calcium fluoride, barium fluoride, and barium sulfate, nitrides such as aluminum nitride and silicon nitride, and mineral-derived materials such as talc, montmorillonite, boehmite, zeolite, apatite, kaolin, mullite, spinel, olivine, sericite, bentonite, and mica, or artificial products thereof.

The positive active material layer may contain, as components other than the positive active material, the sulfide-based solid electrolyte, the conductive agent, the binder, the thickener, and the filler, a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W.

(Method for producing positive electrode)

In the present embodiment, in order to produce the positive electrode, it is preferable to form the positive active material layer by producing a slurry for a positive electrode through mixing the positive active material, the sulfide-based solid electrolyte, the binder, the first solvent, and the second solvent, and optionally a conductive agent, a thickener, a filler, or other optional components as needed, applying the slurry for a positive electrode onto a positive substrate or the like, and drying the slurry.

The specific forms and suitable forms of the positive active material, the sulfide-based solid electrolyte, the binder, and, if necessary, optional components such as a conductive agent, a thickener, and a filler contained in the slurry for a positive electrode are the same as the specific forms and suitable forms of the positive active material, the sulfide-based solid electrolyte, the binder, and, if necessary, optional components such as a conductive agent, a thickener, and a filler included in the positive electrode according to an embodiment of the present invention described above. The first solvent and the second solvent are preferably mixed so that the solid content of the slurry for a positive electrode is 10 to 60% by mass.

(Solvent of slurry for positive electrode)

In the present embodiment, the slurry for a positive electrode contains a first solvent and a second solvent. The first solvent is one or more selected from fluorinated ethers and fluorinated alkanes, and the second solvent is one or more selected from carboxylic acid esters, and trifluoroalkylbenzenes or bis(trifluoroalkyl)benzenes having a terminal $CF_3$ group.

Here, as the fluorinated ether serving as the first solvent,

1,1,2,2-tetrafluoroethyl-2,2,3,3-tetrafluoropropyl ether,
(1,2,2,2-tetrafluoroethyl)(heptafluoropropyl) ether,

ethyl-1,1,2,2-tetrafluoroethyl ether, 1,1,1,2,3,4,4,5,5,5-decafluoro-3-methoxy-2-(trifluoromethyl)pentane, and the like can be used, and as the fluorinated alkane, 2H,3H-decafluoropentane, pentafluorobutane, 1H,6H-dodecafluorohexane, 1H-perfluorohexane, 1H,1H,1H,2H,2H-nonafluorohexane, and the like can be used.

Here, it is preferable that one or more selected from carboxylic acid esters, and trifluoroalkylbenzenes or bis(trifluoroalkyl)benzenes having a terminal $CF_3$ group, serving as the second solvent, are solvents in which the values of a dispersion parameter $\delta_d$, a polarity parameter $\delta_p$, and a hydrogen bonding parameter $\delta_h$ in Hansen solubility parameters (HSP values) satisfy ranges of $14.8 \leq \delta_d \leq 17.5$, $1.0 \leq \delta_p \leq 7.0$, and $1.0 \leq \delta_h \leq 7.0$, respectively.

As the carboxylic acid ester, butyl butyrate, butyl acetate, and the like can be used, as the trifluoroalkylbenzene having a terminal $CF_3$ group, trifluoromethylbenzene, 2,2,2-trifluoroethylbenzene, and the like can be used, and as the bis(trifluoroalkyl)benzene having a terminal $CF_3$ group, 1,2-bis(trifluoromethyl)benzene, 1,3-bis(trifluoromethyl)benzene, 1,4-bis(trifluoromethyl)benzene, and the like can be used.

The first solvent (a fluorinated ether or a fluorinated alkane) preferably has a boiling point of 50°C or higher and 220°C or lower, more preferably 65°C or higher and 190°C or lower, and still more preferably 80°C or higher and 160°C or lower. The boiling point of 1,1,2,2-tetrafluoroethyl-2,2,3,3-tetrafluoropropyl ether is 92°C, the boiling point of 2H,3H-decafluoropentane is 55°C, and the boiling point of 1H,6H-dodecafluorohexane is 84°C. By setting the boiling point of the first solvent to be equal to or higher than the above lower limit, the drying rate of the solvent contained in the slurry for a positive electrode can be prevented from becoming excessively high, thereby making the coating properties favorable. When a solvent having a relatively low boiling point is used as the first solvent, it is preferable to use a solvent having a relatively high boiling point as the second solvent from the viewpoint of coating properties. By setting the boiling point of the first solvent to be equal to or lower than the above upper limit, the amount of residual solvent contained in the positive active material layer after applying and drying of the positive electrode slurry can be reduced, and the risk of reduction in discharge capacity of the battery due to the residual solvent can be reduced.

It is preferable that the proportion of fluorine atoms contained in the molecular structure of the first solvent (a fluorinated ether or a fluorinated alkane) is not excessively low, since this can suppress the solubility of sulfur in the first solvent. In addition, it is preferable that the proportion of fluorine atoms contained in the molecular structure of the first solvent (a fluorinated ether or a fluorinated alkane) is not excessively high, since this can improve the compatibility with the second solvent and facilitate the production of the slurry for a positive electrode.

The boiling point of the second solvent is not particularly limited, and is preferably 80°C or higher and 220°C or lower, more preferably 95°C or higher and 200°C or lower, and still more preferably 110°C or higher and 180°C or lower. The boiling point of butyl butyrate is 160°C, and the boiling point of trifluoromethylbenzene (benzotrifluoride) is 101°C. By setting the boiling point of the second solvent to be equal to or higher than the above lower limit, the drying rate of the solvent contained in the slurry for a positive electrode can be prevented from becoming excessively high, and the coating properties can be made favorable. When a solvent having a relatively low boiling point is used as the second solvent, it is preferable to use a solvent having a relatively high boiling point as the first solvent from the viewpoint of coating properties. By setting the boiling point of the second solvent to be equal to or lower than the above upper limit, the amount of residual solvent contained in the positive active material layer after applying and drying of the positive electrode slurry can be reduced, and the risk of reduction in discharge capacity of the battery due to the residual solvent can be reduced.

It is preferable to select, as the second solvent, a solvent having a molecular structure containing fluorine atoms, since this can suppress the solubility of sulfur in the second solvent. As the second solvent, trifluoroalkylbenzenes and bis(trifluoroalkyl)benzenes having a terminal $CF_3$ group are particularly preferable.

A preferred combination of the first solvent and the second solvent will be described more specifically as follows. When a solvent having a boiling point of 50°C or higher and 65°C or lower is used as the first solvent, it is preferable to use, as the second solvent, a solvent having a boiling point of 140°C or higher, and more preferable to use a solvent having a boiling point of 160°C or higher. When a solvent having a boiling point of 65°C or higher and 80°C or lower is used as the first solvent, it is preferable to use, as the second solvent, a solvent having a boiling point of 120°C or higher, and more preferable to use a solvent having a boiling point of 140°C or higher. By combining such a first solvent and a second solvent, the drying rate of the solvent contained in the slurry for a positive electrode can be prevented from becoming excessively high, and the coating properties can be made favorable.

The mixing ratio (% by mass) of the first solvent and the second solvent is preferably in a range of 99:1 to 10:90, and more preferably in a range of 90:10 to 30:70.

The slurry for a positive electrode may contain an organic solvent other than the first solvent and the second solvent as long as the effects of the present invention are not impaired.

(Method for producing slurry for positive electrode)

The method for mixing the slurry for a positive electrode is not particularly limited as long as the binder dissolves in the first solvent and the second solvent, and a slurry for a positive electrode having high dispersibility of the positive active material and the like can be obtained. For example, a general method using a dissolver, a homomixer, a kneader, a roll mill, a sand mill, an attritor, a ball mill, a vibrator mill, a high-speed impeller mill, an ultrasonic homogenizer, a shaker, and the like can be employed.

The solid content ratio of the slurry for a positive electrode is preferably 10 to 60% by mass, and more preferably 25 to 45% by mass. The slurry for a positive electrode using the first solvent (a fluorinated ether or a fluorinated alkane) and the second solvent has favorable coating properties even when the solid content ratio is high.

(Applying method and drying method of slurry for positive electrode and the like)

The slurry for a positive electrode can be applied onto the positive substrate, and can also be applied onto the solid electrolyte layer.

The method for applying the slurry for a positive electrode is not particularly limited. For example, a general method such as a doctor blade method, a die coating method, a gravure coating method, a spray coating method, an electrostatic coating method, or a bar coating method can be employed.

The coating thickness of the slurry for a positive electrode is appropriately selected according to the thickness of the intended positive active material layer.

The drying method after applying the slurry for a positive electrode is not particularly limited as long as it does not deteriorate the positive active material layer. For example, a general method such as hot-air drying, infrared drying, reduced-pressure drying, or dielectric-heating drying can be employed. In addition, examples of the drying atmosphere include an inert gas atmosphere such as an argon gas atmosphere or a nitrogen gas atmosphere, an air atmosphere, and a reduced-pressure atmosphere.

As the drying conditions, it is preferable to perform drying at 60°C to 150°C for 10 minutes to 12 hours.

The method for producing a positive electrode in the present embodiment may include any steps other than the above-described steps. Examples of such steps include a compression step. By including a compression step, it is possible to obtain a high-density positive active material layer and to achieve a higher energy density by thinning the positive active material layer.

By the above method, it is possible to produce a positive electrode having a positive active material layer using the slurry for a positive electrode according to the present embodiment.

(Negative electrode)

The negative electrode has a negative substrate and a negative active material layer disposed directly or via an intermediate layer on the negative substrate. The intermediate layer can have the same configuration as the intermediate layer of the positive electrode.

The negative substrate has conductivity. As a material for the negative substrate, a metal such as copper, nickel, stainless steel, nickel-plated steel, and aluminum, or an alloy thereof, a carbonaceous material, or the like is used. Among these materials, copper or a copper alloy is preferable. Examples of the negative substrate include a foil, a deposited film, a mesh, and a porous material, and a foil is preferable from the viewpoint of costs. Therefore, the negative substrate is preferably a copper foil or a copper alloy foil. Examples of the copper foil include a rolled copper foil and an electrolytic copper foil.

The average thickness of the negative substrate is preferably 2 $\mu$m or more and 35 $\mu$m or less, more preferably 3 $\mu$m or more and 30 $\mu$m or less, still more preferably 4 $\mu$m or more and 25 $\mu$m or less, and particularly preferably 5 $\mu$m or more and 20 $\mu$m or less. By setting the average thickness of the negative substrate within the above range, it is possible to enhance the energy density per unit volume of the battery while increasing the strength of the negative substrate.

The negative active material layer contains a negative active material. In the present embodiment, the negative active material layer may be formed only of a negative active material, or may be formed of a negative composite containing a negative active material. When the negative active material layer is formed of a negative composite, it contains, as necessary, optional components such as a conductive agent, a solid electrolyte, a binder, a thickener, and a filler. The solid electrolyte contained in the negative active material layer can be the same type as the sulfide-based solid electrolyte contained in the positive active material layer. In addition, the optional components such as a conductive agent, a binder, a thickener, and a filler can be selected from the materials exemplified for the positive electrode.

The negative active material layer may contain, as components other than the negative active material, the solid electrolyte, the conductive agent, the binder, the thickener, and the filler, a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Ta, Hf, Nb, or W.

The negative active material can be appropriately selected from known negative active materials. As a negative active material for a lithium ion secondary battery, a material capable of occluding and releasing lithium ions is typically used. Examples of the negative active material include metal Li; metals or metalloids such as Si and Sn; metal oxides or metalloid oxides such as Si oxide, Ti oxide, and Sn oxide; lithium compounds; Ti-containing oxides such as $TiNb_2O_7$; polyphosphoric acid compounds; silicon carbide; and carbon materials such as graphite and non-graphitic carbon (easily graphitizable carbon or non-graphitizable carbon). Among these negative active materials, negative active materials containing lithium elements, such as metal Li and lithium compounds, are suitably used. Among them, metal Li is more preferably used as the negative active material. The metal Li may be pure metal Li consisting substantially only of lithium elements, or may be a lithium alloy containing other metal elements. Examples of the lithium alloy include a lithium silver alloy, a lithium zinc alloy, a lithium calcium alloy, a lithium aluminum alloy, a lithium magnesium alloy, and a lithium indium alloy. The lithium alloy may contain a plurality of metal elements other than lithium elements. Examples of the lithium compound include $Li_4Ti_5O_{12}$ and $LiTiO_2$. In the negative active material layer, one of these materials may be used alone, or two or more of them may be used in combination as necessary.

The term "graphite" refers to a carbon material in which an average lattice spacing ($d_{002}$) of the (002) plane determined by an X-ray diffraction method is 0.33 nm or more and less than 0.34 nm in a state before charge and discharge or in a discharged state. Examples of the graphite include natural graphite and artificial graphite. Artificial graphite is preferable from the viewpoint that a material having stable physical properties can be obtained.

The term "non-graphitic carbon" refers to a carbon material in which the average lattice spacing ($d_{002}$) of the (002) plane determined by the X-ray diffraction method is 0.34 nm or more and 0.42 nm or less in a state before charge and discharge or in a discharged state. Examples of the non-graphitic carbon include non-graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material.

Here, the term "discharged state" refers to a state in which the carbon material as the negative active material is discharged so that lithium ions, which can be absorbed and released with charge and discharge, are sufficiently released. For example, the discharged state is a state in which, in a half-cell in which a negative electrode containing a carbon material as the negative active material is used as a working electrode and metal Li is used as a counter electrode, the open-circuit voltage is 0.7 V or higher.

The "non-graphitizable carbon" refers to a carbon material in which the $d_{002}$ is 0.36 nm or more and 0.42 nm or less.

The "easily graphitizable carbon" refers to a carbon material in which the $d_{002}$ is 0.34 nm or more and less than 0.36 nm.

The negative active material is usually particles (powder). The average particle size of the negative active material can be, for example, 1 nm or more and 100 μm or less. When the negative active material is a carbon material, a titanium-containing oxide, or a polyphosphoric acid compound, the average particle size thereof may be 1 μm or more and 100 μm or less. When the negative active material is Si, Sn, Si oxide, Sn oxide, or the like, the average particle size thereof may be 1 nm or more and 1 μm or less. By setting the average particle size of the negative active material to be equal to or greater than the above lower limit, the negative active material is easily produced or handled. By setting the average particle size of the negative active material to be equal to or less than the above upper limit, the capacity during high rate discharge can be increased. A crusher, a classifier, or the like is used to obtain a negative active material with a predetermined particle size. A crushing method and a classification method can be selected from, for example, the methods exemplified for the positive electrode. When the negative active material is a metal such as metal Li, the negative active material may be in the form of a foil.

The content of the negative active material in the negative active material layer is preferably 33% by mass or more and 95% by mass or less, more preferably 50% by mass or more and 90% by mass or less, still more preferably 60% by mass or more and 80% by mass or less. By setting the content of the negative active material within the above range, both higher energy density and productivity of the negative active material layer can be achieved. When the negative active material is a metal such as metal Li, the content of the negative active material in the negative active material layer may be 99% by mass or more, and may be 100% by mass.

(Method for producing negative electrode)

The method for producing a negative electrode is not particularly limited, and examples thereof include the following methods. For example, when the negative active material layer is formed of a negative composite, a negative active material, a solid electrolyte, a binder, an organic solvent (dispersion medium), and, as necessary, optional components such as a conductive agent, a thickener, and a filler are mixed to produce a slurry for a negative electrode, and the slurry for a negative electrode is applied onto the negative substrate or the like and dried, thereby obtaining the negative active material layer. The slurry for a negative electrode may further contain, as necessary, other materials such as a binder, a thickener, and a filler. The other materials such as the binder, the thickener, and the filler can be selected from the materials exemplified for the positive electrode.

The content of the solid electrolyte in the slurry for a negative electrode is preferably in a range of 10% by mass or more and 90% by mass or less, and more preferably in a range of 30% by mass or more and 70% by mass or less.

The method for mixing the slurry for a negative electrode can employ the same method as the method for mixing the slurry for a positive electrode described above.

The slurry for a negative electrode can be applied onto the negative substrate, and can also be applied onto the solid electrolyte layer.

As the method for applying the slurry for a negative electrode, the same method as the method for applying the slurry for a positive electrode described above can be employed. In addition, the coating thickness of the slurry for a negative electrode can be appropriately selected depending on the purpose.

As the drying method after applying the slurry for a negative electrode, the same method as the drying method of the slurry for a positive electrode described above can be employed. In addition, the thickness of the negative active material layer formed by the present step may be appropriately selected depending on the purpose.

In addition, as another method for producing a negative electrode, a method for forming a metal film serving as the negative active material layer on the negative substrate can be mentioned. The metal contained in the metal film is selected from the metals (pure metals and alloys) exemplified as the negative active material for the negative electrode.

The method for forming the metal film is not particularly limited, and a method for forming a layer or a film used in a known technique can be used. For example, methods such as crimping, coating, sputtering, and vapor deposition can be used. In addition, the thickness of the metal film formed by the present step may be appropriately selected depending on the purpose.

The method for producing a negative electrode in the present embodiment may include any steps other than the above-described steps. Examples of such steps include a compression step. By including a compression step, it is possible to obtain a high-density negative active material layer and to achieve a higher energy density by thinning the negative active material layer.

(Solid electrolyte layer)

In the present embodiment, the solid electrolyte constituting the solid electrolyte layer is preferably a sulfide-based solid electrolyte. As the sulfide-based solid electrolyte, the same type as the sulfide-based solid electrolyte contained in the positive active material layer can be used.

Known halide-based solid electrolytes, oxide-based solid electrolytes, and the like may be used together with the sulfide-based solid electrolyte or instead of the sulfide-based solid electrolyte.

(Method for producing solid electrolyte layer)

In the present embodiment, in order to produce a solid electrolyte layer, it is preferable that a solid electrolyte and an organic solvent (dispersion medium) are mixed to produce a slurry for forming a solid electrolyte layer, and the slurry for forming a solid electrolyte layer is applied onto a substrate and dried to form a solid electrolyte layer.

The slurry for forming a solid electrolyte layer may further contain, as necessary, other materials such as a binder, a thickener, and a filler. Among them, it is preferable to further contain a binder. The other materials such as the binder, the thickener, and the filler can be selected from the materials exemplified for the positive electrode.

The content of the solid electrolyte in the slurry for forming a solid electrolyte layer is preferably in a range of 10% by mass or more and 90% by mass or less, and more preferably in a range of 40% by mass or more and 70% by mass or less.

The slurry for forming a solid electrolyte layer can be applied, for example, to a releasable substrate such as a metal foil or a fluorine-based resin sheet, an electrode active material layer, and the like. When applied onto an electrode active material layer, it is possible to directly apply the slurry onto a positive active material layer or a negative active material layer.

As the method for applying the slurry for forming a solid electrolyte layer, the same method as the method for applying the slurry for a positive electrode described above can be employed. In addition, the coating thickness of the slurry for forming a solid electrolyte layer can be appropriately selected depending on the purpose.

As the drying method after applying the slurry for forming a solid electrolyte layer, the same method as the drying method of the slurry for a positive electrode described above can be employed. In addition, the thickness of the solid electrolyte layer formed by the present step is preferably in a range of 0.01 $\mu$m or more and 1,000 $\mu$m or less, and more preferably in a range of 0.1 $\mu$m or more and 200 $\mu$m or less.

The method for producing a solid electrolyte layer in the present embodiment may include any steps other than the above-described steps. Examples of such steps include a compression step. By including a compression step, it is possible to obtain a high-density solid electrolyte layer and to achieve improvement in ionic conductivity and higher energy density by thinning the solid electrolyte layer.

<Method for manufacturing battery>

A method for manufacturing a battery in the present embodiment can be appropriately selected from known methods. When the battery in the present embodiment is an all-solid-state secondary battery, the manufacturing method includes, for example, forming a positive active material layer by the method for producing a positive electrode described above, forming a negative active material layer by the method for producing a negative electrode, forming a solid electrolyte layer by the method for producing a solid electrolyte layer, and forming an electrode assembly by stacking a positive electrode having the positive active material layer and a negative electrode having the negative active material layer with the solid electrolyte layer interposed therebetween.

In addition, in the manufacturing method, after forming the solid electrolyte layer, a positive electrode may be formed on the solid electrolyte layer, and an electrode assembly may be formed by using a layered product of the positive electrode and the solid electrolyte layer and a separately formed negative electrode.

For example, after forming the solid electrolyte layer by pressing at a pressure of 100 MPa and room temperature, a positive electrode obtained by coating the positive substrate with the slurry for a positive electrode as described above and drying the slurry is stacked on the solid electrolyte layer, the positive electrode and the solid electrolyte layer are bonded by pressing at a pressure of 360 MPa and room temperature or at 160°C to form a layered product, and the layered product and a negative electrode (an In foil and an Li foil as the negative active material, and an SUS foil as the negative substrate) are then stacked and bonded by pressing at a pressure of 50 MPa and room temperature to form an electrode assembly, thereby obtaining an all-solid-state secondary battery.

In contrast to the above manufacturing method, a layered product may be formed by forming a negative electrode on a solid electrolyte layer, and an electrode assembly may be formed by using the layered product of the negative electrode and the solid electrolyte layer and a separately formed positive electrode.

The shape of the battery of the present embodiment is not particularly limited. Examples thereof include a cylindrical battery, a prismatic battery, a flat battery, a coin battery, and a button battery.

For example, the all-solid-state secondary battery 10 in which the positive electrode 1 and the negative electrode 2 illustrated in Fig. 1 are stacked with the solid electrolyte layer 3 interposed therebetween can be housed in a prismatic case to form a prismatic battery.

<Configuration of energy storage apparatus>

The battery according to the present embodiment can be mounted, as an energy storage unit (battery module) configured by assembling a plurality of batteries, on a power source for a motor vehicle such as an electric vehicle (EV), a hybrid electric vehicle (HEV), or a plug-in hybrid electric vehicle (PHEV), a power source for an electronic device such as a personal computer or a communication terminal, a power source for power storage, or the like. In this case, it is sufficient that the technique of the present invention is applied to at least one battery included in the energy storage unit.

Fig. 2 illustrates an example of an energy storage apparatus 30 obtained by further assembling energy storage units 20 that each have two or more electrically connected all-solid-state secondary batteries 10 assembled. The energy storage apparatus 30 may include a busbar (not illustrated) that electrically connects two or more all-solid-state secondary batteries 10, a busbar (not illustrated) that electrically connects two or more energy storage units 20, and the like. The energy storage unit 20 or the energy storage apparatus 30 may include a state monitor (not illustrated) that monitors the state of one or more all-solid-state secondary batteries.

<Other embodiments>

Note that the battery of the present invention is not limited to the above embodiments, and various modifications may be made without departing from the gist of the present invention. For example, the configuration of another embodiment can be added to the configuration of an embodiment, or a part of the configuration of an embodiment can also be replaced with the configuration of another embodiment or a known technique. Furthermore, a part of the configuration of an embodiment can be deleted. In addition, a well-known technique can be added to the configuration of an embodiment.

EXAMPLES

Hereinafter, the present invention will be described more specifically with reference to Examples. The present invention is not limited to the following Examples.

[Example 1]

(Preparation of sulfide-based solid electrolyte)

$Li_2S$ (0.478 g) and $P_2S_5$ (0.772 g) were mixed in an agate mortar. The mixture was charged into a sealed 80 mL zirconia pot containing 160 g of zirconia balls with a diameter of 4 mm. These steps were performed under an argon atmosphere having a dew point of -50°C or lower. Next, a mechanical milling treatment was performed at a revolution speed of 510 rpm for 45 hours using a planetary ball mill (manufactured by FRITSCH, model number: Premium line P-7) to obtain $75Li_2S \cdot 25P_2S_5$ (LPS), which is a sulfide-based solid electrolyte.

(Production of sulfur-porous carbon composite)

Sulfur (manufactured by Sigma-Aldrich Co. LLC) and active carbon MH-00 (manufactured by Toyo Tanso Co., Ltd.) as porous carbon were mixed at a mass ratio of 65:35 to obtain a mixture A. The mixture A was set in a sealed electric furnace. The temperature of the electric furnace was raised to 150°C at a temperature rise rate of 5°C/min and maintained for 5 hours, and then the mixture was cooled to 80°C, which is the temperature at which sulfur solidifies. Thereafter, the temperature was subsequently raised again to 300°C at a temperature rise rate of 5°C/min and maintained for 2 hours to perform a heat treatment, and then, the mixture was cooled to room temperature to produce a sulfur-porous carbon composite.

(Production of sulfur-porous carbon-solid electrolyte composite)

The sulfur-porous carbon composite produced as described above and the LPS produced as described above were mixed at a mass ratio of 60:40 to obtain a mixture B. The mixture B was charged into a sealed 80-mL zirconia pot containing 100 g of zirconia balls with a diameter of 4 mm. These steps were performed under an argon atmosphere having a dew point of -50°C or lower. Next, the materials were composited by mechanical milling at a revolution speed of 300 rpm for 15 minutes using a planetary ball mill to obtain a sulfur-porous carbon-solid electrolyte composite.

(Production of slurry for positive electrode and positive electrode)

A mixed solvent of 1,1,2,2-tetrafluoroethyl-2,2,3,3-tetrafluoropropyl ether and butyl butyrate was prepared by mixing 1,1,2,2-tetrafluoroethyl-2,2,3,3-tetrafluoropropyl ether, which is a fluorinated ether serving as a first solvent, and butyl butyrate, which is a carboxylic acid ester serving as a second solvent, at a mass ratio of 60:40. 0.2 g of a fluororesin binder PVdF-HFP (soluble in butyl butyrate) and 3.8 g of the mixed solvent were placed in a glass case, and stirred with a magnetic stirrer for 12 hours or longer to dissolve the binder, thereby obtaining a binder solution 1.

To 67.5 parts by mass of the sulfur-porous carbon-solid electrolyte composite produced as described above (40.5 parts by mass of the sulfur-porous carbon composite and 27 parts by mass of LPS) and 2.25 parts by mass of acetylene black (conductive agent, BET specific surface area: 45 $m^2/g$), the binder solution 1 was added so as to obtain 5.25 parts by mass (in terms of solid content) of PVdF-HFP, and the mixture was mixed with a planetary centrifugal mixer. To the obtained mixed product, 25 parts by mass of an argyrodite-type solid electrolyte ($Li_6PS_5Cl$, BET specific surface area: 14 $m^2/g$) and the mixed solvent of 1,1,2,2-tetrafluoroethyl-2,2,3,3-tetrafluoropropyl ether and butyl butyrate produced as described above were added, and further mixed with a planetary centrifugal mixer to obtain a slurry for a positive electrode (solid content ratio: 35% by mass) according to Example 1. The obtained slurry for a positive electrode was applied onto an Al foil serving as a positive substrate and dried under reduced pressure at 80°C to form a positive active material layer, thereby obtaining a positive electrode according to Example 1.

[Example 2]

A mixed solvent of 2H,3H-decafluoropentane and butyl butyrate was prepared by mixing 2H,3H-decafluoropentane, which is a fluorinated alkane serving as a first solvent, and butyl butyrate, which is a carboxylic acid ester serving as a second solvent, at a mass ratio of 60:40. A binder solution 2 and a slurry for a positive electrode according to Example 2 were obtained similarly to Example 1, except that the mixed solvent was used. A positive electrode according to Example 2 was obtained similarly to Example 1, except that the obtained slurry for a positive electrode was used.

[Example 3]

A mixed solvent of 1,1,2,2-tetrafluoroethyl-2,2,3,3-tetrafluoropropyl ether and trifluoromethylbenzene was prepared by mixing 1,1,2,2-tetrafluoroethyl-2,2,3,3-tetrafluoropropyl ether, which is a fluorinated ether serving as a first solvent, and trifluoromethylbenzene, which is a trifluoroalkylbenzene having a terminal $CF_3$ group and serving as a second solvent, at a mass ratio of 60:40. A binder solution 3 and a slurry for a positive electrode according to Example 3 were obtained similarly to Example 1, except that the mixed solvent was used. A positive electrode according to Example 3 was obtained similarly to Example 1, except that the obtained slurry for a positive electrode was used.

[Example 4]

A mixed solvent of 1H,6H-dodecafluorohexane and trifluoromethylbenzene was prepared by mixing 1H,6H-dodecafluorohexane, which is a fluorinated alkane serving as a first solvent, and trifluoromethylbenzene, which is a trifluoroalkylbenzene having a terminal $CF_3$ group and serving as a second solvent, at a mass ratio of 60:40. A binder solution 4 and a slurry for a positive electrode according to Example 4 were obtained similarly to Example 1, except that the mixed solvent was used. A positive electrode according to Example 4 was obtained similarly to Example 1, except that the obtained slurry for a positive electrode was used.

[Comparative Example 1]

A binder solution and a slurry for a positive electrode according to Comparative Example 1 were obtained similarly to Example 1, except that butyl butyrate alone was used as the solvent instead of the mixed solvent of fluorinated ether and butyl butyrate. A positive electrode according to Comparative Example 1 was obtained similarly to Example 1, except that the obtained slurry for a positive electrode was used.

[Comparative Example 2]

A binder solution and a slurry for a positive electrode according to Comparative Example 2 were obtained similarly to Example 3, except that trifluoromethylbenzene alone was used as the solvent instead of the mixed solvent of fluorinated ether and trifluoromethylbenzene. A positive electrode according to Comparative Example 2 was obtained similarly to Example 1, except that the obtained slurry for a positive electrode was used.

[Comparative Example 3]

A binder solution and a slurry for a positive electrode according to Comparative Example 3 were obtained similarly to Example 1, except that toluene was used as the solvent instead of the mixed solvent of fluorinated ether and butyl butyrate.

[Comparative Example 4]

A binder solution and a slurry for a positive electrode according to Comparative Example 4 were obtained similarly to Example 1, except that xylene was used as the solvent instead of the mixed solvent of fluorinated ether and butyl butyrate.
The positive electrodes obtained in Examples 1 to 4 and Comparative Examples 1 and 2 were evaluated for coating properties and binding properties, and charge-discharge tests were performed. Table 1 shows the results. The evaluation methods and the charge-discharge test conditions are as follows. Note that, for the binder solutions of Comparative Examples 3 and 4 using toluene or xylene as a solvent, an applicable slurry for a positive electrode was not obtained because the binder was only slightly dissolved in the solvent.

(Evaluation of coating properties)

The appearance of the positive electrode obtained by applying and drying the slurry for a positive electrode was observed, and the presence or absence of uneven coating in the positive active material layer, clumps, and exposure of the Al foil was confirmed. The positive active material layer with little or no occurrence of uneven coating, clumps, or exposure of the Al foil was evaluated as ○, and the positive active material layer with remarkable occurrence of such defects was evaluated as ×.

(Evaluation of binding properties)

The positive electrode obtained by applying and drying the slurry for a positive electrode was punched to a diameter of 10 mm using an "electrode extraction hand punch" (trade name, manufactured by NOGAMI TECHNICAL INDUSTRY Co., Ltd.), and the degree of peeling of the positive active material layer from the Al foil (such as cracking, chipping, or powder detachment) was evaluated. In the punched positive electrode, the electrode was marked with O when the positive active material layer was not peeled off from the Al foil at all, and was marked with × when peeling occurred even partially.

(Manufacture of battery (all-solid-state secondary battery))

The positive electrodes according to Examples 1 to 4 and Comparative Examples 1 and 2 were each punched to a diameter of 10 mm using an "electrode extraction hand punch" (trade name, manufactured by NOGAMI TECHNICAL INDUSTRY Co., Ltd.). 80 mg of an argyrodite-type solid electrolyte ($Li_6PS_5Cl$) was inserted into a ceramic powder molding die having an inner diameter of 10 mm, and uniaxially press-molded at a pressure of 50 MPa for several seconds to form a solid electrolyte layer 3. After pressure release, the positive electrode was stacked on one surface of the solid electrolyte layer so that the positive active material layer 5 faced the solid electrolyte layer, and uniaxially pressed at 400 MPa for 5 minutes. After pressure release, an In foil (manufactured by The Nilaco Corporation, average thickness: 100 $\mu$m, diameter: 10 mm) and an Li foil (manufactured by Honjo Metal Co., Ltd., average thickness: 100 $\mu$m, diameter: 8 mm) were stacked on the surface opposite from the surface on which the positive electrode was stacked, and uniaxially pressed at a pressure of 50 MPa for several seconds to form a negative active material layer 6 formed of an LiIn alloy. The resulting electrode assembly was taken out from the ceramic powder molding die to obtain a battery (all-solid-state secondary battery).

(Charge-discharge test)

A charge-discharge test was performed on each battery (all-solid-state secondary battery) using each of the positive electrodes according to Examples 1 to 4 and Comparative Examples 1 and 2. The charge was performed by constant current charge with a current of 0.1 C and an upper limit voltage of 2.4 V. The discharge was performed by constant current discharge with a current of 0.1 C and a lower limit voltage of 0.7 V. A rest period of 10 minutes was provided after charge and after discharge. This charge-discharge was performed for two cycles, and the discharge capacity (mAh/g) in the second cycle was recorded. The results are shown in Table 1. Note that the discharge capacities shown in Table 1 are each discharge capacities per unit mass of sulfur.

[Table 1]

| | | Solvent | Coating properties | Binding properties | Discharge capacity mAh/g |
|---|---|---|---|---|---|
| | Example 1 | Fluorinated ether : butyl butyrate = 60 : 40 (mass ratio) | ○ | ○ | 1483 |
| | Example 2 | Fluorinated alkane : butyl butyrate = 60 : 40 (mass ratio) | ○ | ○ | 1584 |
| | Example 3 | Fluorinated ether : trifluoromethylbenzene = 60 : 40 (mass ratio) | ○ | ○ | 1601 |
| | Example 4 | Fluorinated alkane : trifluoromethylbenzene = 60 : 40 (mass ratio) | ○ | ○ | 1667 |
| | Comparative Example 1 | Butyl butyrate | ○ | × | 1404 |
| | Comparative Example 2 | Trifluoromethylbenzene | × | ○ | 1586 |

In the positive electrode obtained using the slurry for a positive electrode of Comparative Example 1, in which only butyl butyrate was used as the solvent, as a result of evaluating the binding properties, the positive active material layer was partially peeled from the Al foil serving as the substrate at the edge portion of the positive electrode, and the binding properties were not favorable. In addition, the discharge capacity was low. This is presumed to be due to the use of only butyl butyrate as the solvent of the slurry for a positive electrode, which did not allow suppression of the dissolution of sulfur in butyl butyrate.

In the positive electrode obtained using the slurry for a positive electrode of Comparative Example 2, in which only trifluoromethylbenzene was used as the solvent, as a result of evaluating coating properties, clumps and exposure of the Al foil serving as the positive substrate were observed, and the coating properties were not favorable. This is presumed to be because trifluoromethylbenzene used as the solvent of the slurry for a positive electrode has a low boiling point of 101°C, and the drying rate of the solvent contained in the slurry for a positive electrode could not be suppressed, and in addition, the dissolution of sulfur in trifluoromethylbenzene could not be suppressed, resulting in poor fluidity of the slurry for a positive electrode.

On the other hand, the positive electrodes obtained using the slurries for a positive electrode of Examples 1 to 4, in which mixed solvents prepared by combining a first solvent of a fluorinated ether or a fluorinated alkane with a second solvent of butyl butyrate (a carboxylic acid ester) or trifluoromethylbenzene (a trifluoroalkylbenzene having a terminal $CF_3$ group) were used, exhibited favorable performance in terms of coating properties, binding properties, and discharge capacity.

Although the fluorinated ether and fluorinated alkane serving as the first solvents have lower boiling points than trifluoromethylbenzene serving as the second solvent, the slurries for a positive electrode of Examples 3 and 4, in which the first and second solvents were used in combination, exhibited better coating properties than the slurry for a positive electrode of Comparative Example 2 in which trifluoromethylbenzene was used alone. Therefore, it is presumed that by using the first solvent in combination with the second solvent, the dissolution of sulfur in the mixed solvent was suppressed, thereby obtaining a slurry for a positive electrode having favorable fluidity.

(Relationship between Hansen solubility parameters (HSP values) of solvent and binder solubility)

As described above, for the binder solutions of Comparative Examples 3 and 4 using toluene or xylene as a solvent, the effect as a slurry for a positive electrode could not be confirmed because the binder was dissolved only slightly in the solvent. On the other hand, in the above Examples, the second solvent is a solvent in which the binder is well dissolved. Therefore, the relationship between the solubility of the binder and the HSP values and SP value of the solvent was investigated. With respect to binder solubility, 0.2 g of a fluororesin binder, PVdF-HFP (soluble in butyl butyrate), and 3.8 g of each solvent were placed in a glass case and stirred with a magnetic stirrer for 12 hours or longer. The case was evaluated as ○ when no undissolved binder was observed in the obtained binder solution, and was evaluated as × when the undissolved binder was observed or the binder was hardly dissolved.

Based on the chemical structure of the compound to be calculated, the HSP values (the dispersion parameter $\delta_d$, the polarity parameter $\delta_p$, and the hydrogen bonding parameter $\delta_h$) and the SP value $\sigma_t$ were calculated by structural calculation. For the calculation, the Y-MB method in the DYI program of Hansen Solubility Parameters in Practice (HSPiP) ver. 5.4.03 was used. Note that the relationship between the SP value $\sigma_t$ and the HSP values (the dispersion parameter $\delta_d$, the polarity parameter $\delta_p$, and the hydrogen bonding parameter $\delta_h$) is represented by the following equation (1).

$$\sigma_t{}^2 = \delta_d{}^2 + \delta_p{}^2 + \delta_h{}^2 \ ... \ (1)$$

Table 2 shows the relationship between the Hansen solubility parameters (HSP values) and the SP values of the solvents and the binder solubility.

[Table 2]

| Type of solvent | HSP value | | | SP value | Binder solubility |
|---|---|---|---|---|---|
| | $\delta_d$ | $\delta_p$ | $\delta_h$ | $\sigma_t$ | |
| 1,1,2,2-Tetrafluoroethyl-2,2,2-trifluoroet hyl ether | 14.1 | 5.0 | 4.0 | 15.5 | × |
| 1,1,2,2-Tetrafluoroethyl-2,2,3,3-tetrafluo ropropyl ether | 14.6 | 5.2 | 4.7 | 16.2 | × |
| Heptane | 15.2 | 0.1 | 0.1 | 15.2 | × |
| 1,3-Bis(trifluoromethyl)benzene | 15.4 | 2.4 | 1.4 | 15.7 | ○ |
| Decane | 15.6 | 0.1 | 0.1 | 15.6 | × |
| 1,4-Bis(trifluoromethyl)benzene | 15.6 | 3.1 | 2.3 | 16.0 | ○ |
| Butyl butyrate | 15.9 | 3.8 | 5.0 | 17.1 | ○ |
| Butyl acetate | 15.9 | 4.7 | 6.2 | 17.7 | ○ |
| (Trifluoromethyl)benzene | 16.4 | 2.6 | 2.6 | 16.8 | ○ |
| Mesitylene | 17.9 | 2.9 | 3.1 | 18.4 | × |
| m-Xylene | 18.0 | 2.3 | 2.3 | 18.3 | × |
| Toluene | 18.0 | 2.6 | 3.3 | 18.5 | × |
| Anisole | 18.3 | 4.9 | 5.6 | 19.7 | × |

(continued)

| Type of solvent | HSP value | | | SP value | Binder solubility |
|---|---|---|---|---|---|
| | $\delta_d$ | $\delta_p$ | $\delta_h$ | $\sigma_t$ | |
| Tetralin | 18.7 | 1.9 | 2.6 | 18.9 | $\times$ |
| Acetophenone | 18.7 | 6.8 | 4.5 | 20.4 | $\times$ |

From Table 2, the following can be understood. 1,3-Bis(trifluoromethyl)benzene, 1,4-bis(trifluoromethyl)benzene, (trifluoromethyl)benzene, butyl butyrate, and butyl acetate, which are solvents in which the values of the dispersion parameter $\delta_d$, the polarity parameter $\delta_p$, and the hydrogen bonding parameter $\delta_h$ satisfied ranges of $14.8 \leq \delta_d \leq 17.5$, $1.0 \leq \delta_p \leq 7.0$, and $1.0 \leq \delta_h \leq 7.0$, respectively, exhibited favorable binder solubility (∘). In contrast, 1,1,2,2-tetrafluoroethyl-2,2,2-trifluoroethyl ether and 1,1,2,2-tetrafluoroethyl-2,2,3,3-tetrafluoropropyl ether, which are fluorinated ethers, had dispersion parameter $\delta_d$ values of less than 14.8, m-xylene, mesitylene, toluene, tetralin, anisole, and acetophenone had dispersion parameter $\delta_d$ values exceeding 17.5, and heptane and decane had polarity parameter $\delta_p$ and hydrogen bonding parameter $\delta_h$ values of less than 1.0; thus, since these solvents did not satisfy the above ranges, these solvents exhibited unfavorable binder solubility ($\times$).

In addition, it was also found that even the solvents having similar SP values, such as decane and 1,3-bis(trifluoromethyl)benzene, exhibited different binder solubility.

In the present embodiment, it can be said that by combining, as the second solvent, a "solvent in which the values of the dispersion parameter $\delta_d$, the polarity parameter $\delta_p$, and the hydrogen bonding parameter $\delta_h$ in the Hansen solubility parameters (HSP values) satisfy $14.8 \leq \delta_d \leq 17.5$, $1.0 \leq \delta_p \leq 7.0$, and $1.0 \leq \delta_h \leq 7.0$, respectively", such as 1,3-bis(trifluoromethyl)benzene, 1,4-bis(trifluoromethyl)benzene, (trifluoromethyl)benzene, butyl butyrate, or butyl acetate, which exhibits favorable binder solubility, and one or more first solvents that are "selected from fluorinated ethers and fluorinated alkanes", a slurry for a positive electrode, a positive electrode, and a battery that exhibit favorable coating properties, binding properties, and discharge capacity are obtained.

(Test for confirming sulfur solubility of solvent)

In order to evaluate the sulfur solubility of the solvent, sulfur was immersed in each solvent, and the appearance was confirmed after 7 days. Note that the volume of the solvent and the mass of sulfur were set to be approximately the same in all cases.

As a result of observing the appearance of sulfur after immersion in the solvent for 7 days, it was found that in the case of immersion in butyl butyrate, the number of sulfur particles decreased, indicating that butyl butyrate dissolved sulfur. In addition, in the case of immersion in (trifluoromethyl)benzene, although the number of sulfur particles did not decrease, aggregation between particles was observed, and it was found that (trifluoromethyl)benzene dissolved sulfur, although not to the same extent as butyl butyrate. On the other hand, in the cases of immersion in 1,1,2,2-tetrafluoroethyl-2,2,3,3-tetrafluoropropyl ether, 2H,3H-decafluoropentane, and 1H,6H-dodecafluorohexane, a decrease in the number of sulfur particles and aggregation between particles were not observed, and it was confirmed that sulfur had almost no solubility.

As described above, it is considered that sulfur solubility greatly affects the binding properties, coating properties, and discharge capacity of the positive electrode, and the boiling point of the solvent greatly affects the coating properties of the positive electrode. It has been found that bis(trifluoroalkyl)benzenes (1,3-bis(trifluoromethyl)benzene and 1,4-bis(trifluoromethyl)benzene) have sulfur solubility approximately equivalent to that of (trifluoromethyl)benzene.

Therefore, in the case where 1,3-bis(trifluoromethyl)benzene (boiling point: 116°C) or 1,4-bis(trifluoromethyl)benzene (boiling point: 117°C), which have boiling points approximately equal to that of (trifluoromethyl)benzene (boiling point: 101°C), are used as the second solvent, similarly, it is predicted that, as in the case of (trifluoromethyl)benzene, by combining the second solvent with 1,1,2,2-tetrafluoroethyl-2,2,3,3-tetrafluoropropyl ether or 1H,6H-dodecafluorohexane as a first solvent, a positive electrode exhibiting favorable coating properties, binding properties, and discharge capacity can be obtained.

INDUSTRIAL APPLICABILITY

The slurry for a positive electrode according to one aspect of the present invention, the positive electrode using the slurry for a positive electrode, and the battery including the positive electrode exhibit favorable coating properties, binding properties, and discharge capacity, and therefore, the battery is highly productive and is useful as a battery for a hybrid vehicle, a plug-in hybrid vehicle, and an electric vehicle.

DESCRIPTION OF REFERENCE SIGNS

1: Positive electrode
2: Negative electrode
3: Solid electrolyte layer
4: Positive substrate
5: Positive active material layer
6: Negative active material layer
7: Negative substrate
10: All-solid-state secondary battery
20: Energy storage unit
30: Energy storage apparatus

**Claims**

1. A slurry for a positive electrode, comprising a positive active material containing sulfur, a sulfide-based solid electrolyte, a binder, a first solvent, and a second solvent,

   wherein the first solvent is one or more selected from fluorinated ethers and fluorinated alkanes, and the second solvent is one or more selected from solvents in which values of a dispersion parameter $\delta_d$, a polarity parameter $\delta_p$, and a hydrogen bonding parameter $\delta_h$ in Hansen solubility parameters (HSP values) satisfy ranges of $14.8 \leq \delta_d \leq 17.5$, $1.0 \leq \delta_p \leq 7.0$, and $1.0 \leq \delta_h \leq 7.0$, respectively.

2. The slurry for a positive electrode according to claim 1, wherein the binder is a fluororesin.

3. A slurry for a positive electrode, comprising a positive active material containing sulfur, a sulfide-based solid electrolyte, a binder, a first solvent, and a second solvent,

   wherein the first solvent is one or more selected from fluorinated ethers and fluorinated alkanes, and the second solvent is one or more selected from carboxylic acid esters, and trifluoroalkylbenzenes or bis(trifluoroalkyl)benzenes having a terminal $CF_3$ group.

4. A positive electrode using the slurry for a positive electrode according to any one of claims 1 to 3.

5. A method for producing a positive electrode, comprising applying the slurry for a positive electrode according to any one of claims 1 to 3 onto a substrate and drying the slurry.

6. A battery comprising the positive electrode according to claim 4.

Fig. 1

Fig. 2

**EP 4 693 453 A1**

## INTERNATIONAL SEARCH REPORT

| International application No. |
| --- |
| **PCT/JP2024/025489** |

**A.     CLASSIFICATION OF SUBJECT MATTER**

*H01M 4/139*(2010.01)i; *H01M 4/13*(2010.01)i; *H01M 4/62*(2006.01)i
FI:    H01M4/139; H01M4/13; H01M4/62 Z

According to International Patent Classification (IPC) or to both national classification and IPC

**B.     FIELDS SEARCHED**

Minimum documentation searched (classification system followed by classification symbols)

H01M4/139; H01M4/13; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2016/147857 A1 (HITACHI CHEMICAL COMPANY, LTD.) 22 September 2016 (2016-09-22) | 1-6 |
| A | JP 2022-185480 A (REFINE HOLDINGS CO., LTD.) 14 December 2022 (2022-12-14) | 1-6 |
| A | WO 2023/099162 A1 (BAYERISCHE MOTOREN WERKE AKTIENGESELLSCHAFT) 08 June 2023 (2023-06-08) | 1-6 |

☐ Further documents are listed in the continuation of Box C.          ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **01 October 2024** | **08 October 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

21

## INTERNATIONAL SEARCH REPORT
### Information on patent family members

| International application No. |
|---|
| **PCT/JP2024/025489** |

| Patent document cited in search report | | | Publication date (day/month/year) | Patent family member(s) | | | Publication date (day/month/year) |
|---|---|---|---|---|---|---|---|
| WO | 2016/147857 | A1 | 22 September 2016 | US | 2018/0057678 | A1 | |
| | | | | KR | 10-2017-0122243 | A | |
| | | | | CN | 107408700 | A | |
| | | | | KR | 10-2019-0042111 | A | |
| | | | | TW | 201641562 | A | |
| JP | 2022-185480 | A | 14 December 2022 | US | 2023/0307651 | A1 | |
| | | | | WO | 2022/030636 | A1 | |
| | | | | CN | 116420244 | A | |
| WO | 2023/099162 | A1 | 08 June 2023 | DE | 102021131511 | A1 | |
| | | | | KR | 10-2024-0069812 | A | |
| | | | | CN | 118266104 | A | |

Form PCT/ISA/210 (patent family annex) (July 2022)

**EP 4 693 453 A1**

**REFERENCES CITED IN THE DESCRIPTION**

**Patent documents cited in the description**

- JP 5926131 B
- JP 2020119761 A
- JP 2019091632 A